# EUROPEAN PATENT APPLICATION

(11) **EP 1 239 363 A2**
(43) Date of publication of application: **11.09.2002**
(21) Application number: 02004378.2
(22) Date of filing: 05.03.2002
(51) Int. Cl.: G06F 7/58

(54) **Random number's seed generating circuit, driver having the same, and SD memory card system**

(30) Priority: 07.03.2001 JP 2001063988
(71) Applicant: Kabushiki Kaisha Toshiba, Tokyo (JP)
(72) Inventor: Arai, Yoshihisa, Intellectual Property Division, Minato-ku, Tokyo 105-8001 (JP)
(74) Representative: HOFFMANN - EITLE

(57) **Abstract**

A random number's seed is changed without using any nonvolatile memory every time the circuit is activated. An oscillator (14) operates immediately after the power supply is turned on to generate a high-speed clock. A counter (15) operates in accordance with the high-speed clock to change the count value at a high speed. When a sufficient time has elapsed after the power supply is turned, a power-on reset circuit (10) outputs a power-on reset signal indicating that the internal power supply is stabilized. The power-on reset signal is sufficiently slower than the high-speed clock. The timing at which the power-on reset signal is input to a latch circuit (16) varies. Hence, the count value (random number's seed) latched by the latch circuit (16) changes every time the power supply is turned on. A random number is generated using the random number's seed.

## Description

The present invention relates to a random number's seed generating circuit which determines an initial value (seed) in generating a random number and, more particularly, to a random number's seed generating circuit used for a digital signal processing circuit.

Conventionally, a random number generating circuit to be mounted on an LSI such as a digital signal processing circuit is formed from a shift register, arithmetic unit, and the like. Various methods of generating a random number have been conventionally, proposed. However, an initial value (seed) serving as a base to generate a random number is difficult to determine because it must be determined in consideration of the characteristics of a system or the like.

For example, for a system in which a random number generated by a random number generating circuit only need change at an appropriate period (any initial value can be set), the random number's seed, i.e., initial value can take the same value or almost the same value at a high probability every time a random number is to be generated. An example of such a system is a digital audio system which generates white noise using a random number.

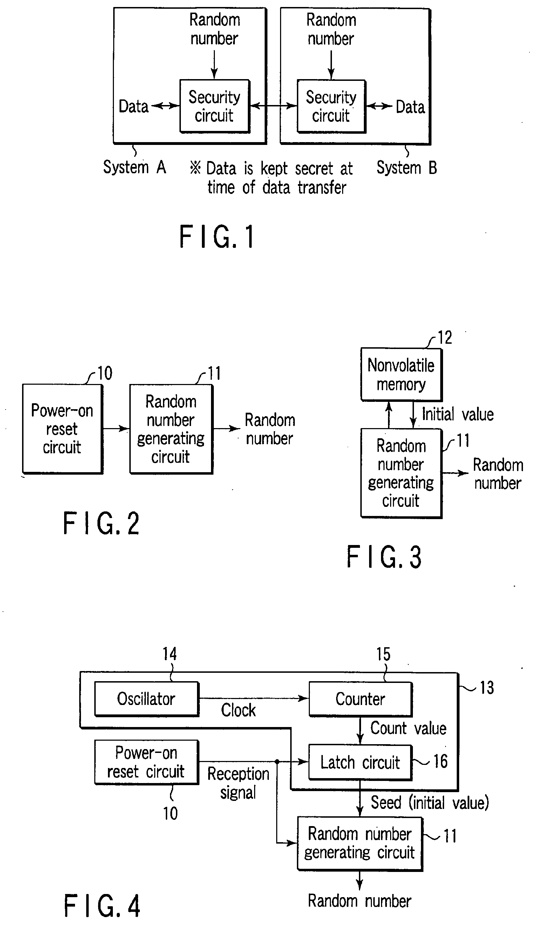

However, for a system in which a random number generated by a random number generating circuit need not only change at an appropriate period but also have a different initial value every time the system is activated, the random number's seed, i.e., initial value must take a different value every time a random number is to be generated. An example of such a system is a system which executes processing related to security using a random number, as shown in FIG. 1, e.g., a system which encrypts transfer data between an SD memory card and its driver (player) to keep the data secret.

As described above, for a system in which a random number generated by a random number generating circuit need not only change at an appropriate period but also have a different initial value every time the system is activated, the random number's seed, i.e., initial value serving as a base to generate a random number must take a different value every time a random number is to be generated.

In a conventional random number generating circuit, however, it is very difficult to set a random number's seed to a different value every time.

For example, consider a random number generating circuit constructed by a shift register. As shown in FIG. 2, normally, every time the power supply is turned on (a random number is to be generated), the value of a random number generating circuit (shift register) 11 is reset by a power-on reset circuit 10. That is, the initial value is always set to the same value by the reset operation of the random number generating circuit 11.

Even when reset of the value of the random number generating circuit 11 by the power-on reset circuit 10 is inhibited to avoid such situation, the initial value of the random number generating circuit 11 takes the same value at a high probability for each chip.

To prevent this, a nonvolatile memory 12 is mounted on an LSI, as shown in FIG. 3. After power-off, the value of the random number generating circuit (shift register) 11 is held in the nonvolatile memory 12. At the next time of power-on, the value held in the nonvolatile memory 12 is used as an initial value.

However, when a nonvolatile memory is mounted on an LSI, generally, the manufacturing cost of the LSI increases. In addition, for some LSIs, it is very difficult to mount a nonvolatile memory due to reasons in the manufacturing process.

It is an object of the present invention to propose a random number's seed generating circuit which can change a random number's seed (initial value to be given to a random number generating circuit) at random every time the circuit is activated without requiring any nonvolatile memory and by using a simple arrangement.

According to an aspect of the present invention, there is provided a random number's seed generating circuit comprising: an oscillator which generates a clock; and a counter which operates in synchronism with the clock, wherein a count value of the counter is output in response to a signal asynchronous with the clock, and the output count value is used as an initial value to generate a random number.

According to another aspect of the present invention, there is provided a driver comprising:
a random number's seed generating circuit having an oscillator which generates a clock and a counter which operates in synchronism with the clock; and
a random number generating circuit which generates a random number using an initial value generated by the random number's seed generating circuit, wherein a count value of the counter is output in response to a signal asynchronous with the clock, the output count value is used as the initial value, and transfer data is kept secret using the random number.

According to still another aspect of the present invention, there is provided an SD memory card system comprising: a driver comprising a random number's seed generating circuit having an oscillator which generates a clock and a counter which operates in synchronism with the clock, and a random number generating circuit which generates a random number using an initial value generated by the random number's seed generating circuit; and an SD memory card driven by the driver and having a data protecting function, wherein a count value of the counter is output in response to a signal asynchronous with the clock, the output count value is used as the initial value, and transfer data is kept secret using the random number.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a conventional random number generating circuit;
FIG. 2 is a block diagram showing another conventional random number generating circuit;
FIG. 3 is a block diagram showing a conventional system using a random number;
FIG. 4 is a block diagram showing a random number's seed generating circuit according to the first embodiment of the present invention;
FIG. 5 is a waveform chart showing the operation of the random number's seed generating circuit shown in FIG. 4;
FIG. 6 is a block diagram showing a random number's seed generating circuit according to the second embodiment of the present invention;
FIG. 7 is a block diagram showing a random number's seed generating circuit according to the third embodiment of the present invention;
FIG. 8 is a block diagram showing a random number's seed generating circuit according to the fourth embodiment of the present invention;
FIG. 9 is a block diagram showing a random number's seed generating circuit according to the fifth embodiment of the present invention;
FIG. 10 is a block diagram showing a random number's seed generating circuit according to the sixth embodiment of the present invention;
FIG. 11 is a block diagram showing a random number's seed generating circuit according to the seventh embodiment of the present invention;
FIG. 12 is a block diagram showing a random number's seed generating circuit according to the eighth embodiment of the present invention;
FIG. 13 is a block diagram showing the schematic arrangement of a system using an SD memory card;
FIG. 14 is a block diagram showing the schematic arrangement of the system using the SD memory card; and
FIG. 15 is a block diagram showing a system formed from an SD memory card and its driver.

A random number's seed generating circuit according to an embodiment of the present invention will be described below in detail with reference to the accompanying drawing.

As a characteristic feature, a random number's seed generating circuit according to an embodiment of the present invention can generate a random number's seed at random with a simple arrangement without using any nonvolatile memory. Embodiments for generating a random number at random will be described below first, and then, examples (application examples) of a system using the random number's seed generating circuit of the present invention will be described.

### [First Embodiment]

FIG. 4 shows a random number's seed generating circuit according to the first embodiment of the present invention.

A random number generating circuit 11 generates a random number on the basis of a random number's seed (initial value) output from a random number's seed generating circuit 13.

The random number's seed generating circuit 13 is constituted by an oscillator 14 which starts generating a clock immediately after power-on, a counter 15 which sequentially increases (or decreases) the count value on the basis of the clock output from the oscillator 14, and a latch circuit 16 which receives the count value of the counter 15 on the basis of a reception signal.

Immediately after power-on, the oscillator 14 must self-oscillate and supply the oscillation output to the respective functional blocks and circuits. This operation is done to set the respective functional blocks and circuits in an operable state. In other words, when the power supply is turned on, the oscillator 14 must operate at the very beginning. The oscillator 14 also generates a high-speed clock at a period of several ns (e.g., about 5 ns).

If an oscillator (e.g., a ring oscillator) which generates a clock having a sufficiently high frequency (e.g., about 200 MHz) is incorporated in the LSI (e.g., a digital signal processing circuit), a clock generated by this oscillator may be supplied to the counter 15.

Since the counter 15 operates on the basis of the high-speed clock, the count value output from the counter 15 also changes at a high speed.

The reception signal is asynchronous with the high-speed clock generated by the oscillator 14. In addition, the time after the power supply is turned on until the reception signal is input to the latch circuit 16 changes within a predetermined range (e.g., several µs to several hundred ms). This range is sufficiently wide with respect to the period (several ns) of the clock generated by the oscillator 14.

That is, the time after the power supply is turned on until the reception signal is input to the latch circuit 16 changes within the range of several µs to several hundred ms at random. On the other hand, the count value changes fast within this range at several ns. For this reason, the count value latched by the latch circuit 16 changes at random every time the power supply is turned on.

Additionally, since the count value latched by the latch circuit 16 is used as a random number's seed (initial value), the random number's seed can consequently be changed at random every time the power supply is turned on.

As the reception signal, for example, the output signal from a power-on reset circuit 10 can be used. In this case, the power-on reset circuit 10 outputs a power-on reset signal (reception signal) after the power supply is turned on and the power supply used in the LSI is stabilized.

The power-on reset signal is asynchronous with the clock generated by the oscillator 14. In addition, the time after the power supply is turned on until the power supply used in the LSI becomes stable is normally several µs to several hundred ms. For this reason, it is advantageous for the present invention to use the output signal from the power-on reset circuit 10 as a reception signal.

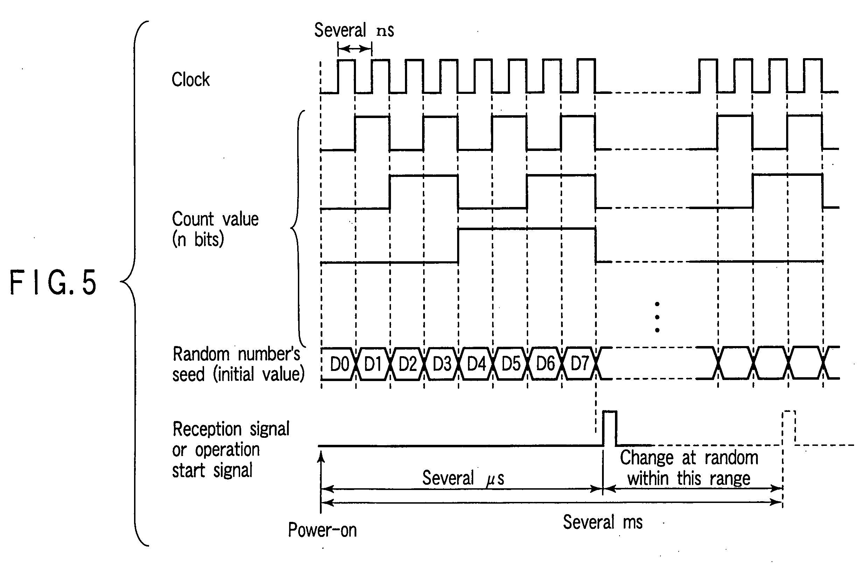

As described above, in this embodiment, the time range after the power supply is turned on until the reception signal is input to the latch circuit 16 is sufficiently widened as compared to the time (clock period) in which the count value changes, as shown in the waveform chart in FIG. 5. In addition, the time after the power supply is turned on until the reception signal is input to the latch circuit 16 changes within this range at random. For this reason, the random number's seed can be changed at random every time the power supply is turned on.

### [Second Embodiment]

A random number's seed generating circuit according to this embodiment is a modification to the random number's seed generating circuit according to the above-described first embodiment.

As characteristic features of the random number's seed generating circuit according to the second embodiment, ① a latch circuit which latches a count value is omitted, and ② the output signal from a power-on reset circuit is directly input to the random number generating circuit as its operation start signal, unlike the random number's seed generating circuit according to the above-described first embodiment.

In this case, the output signal (operation start signal) of the power-on reset circuit does not reset the random number's seed (initial value), unlike the prior arts. That is, in this embodiment, when the output signal from the power-on reset circuit is input to the random number generating circuit, a random number's seed is determined on the basis of the count value of the counter in the random number's seed generating circuit, and the operation of generating a random number starts in the random number generating circuit.

The random number's seed generating circuit according to this embodiment will be described below in detail.

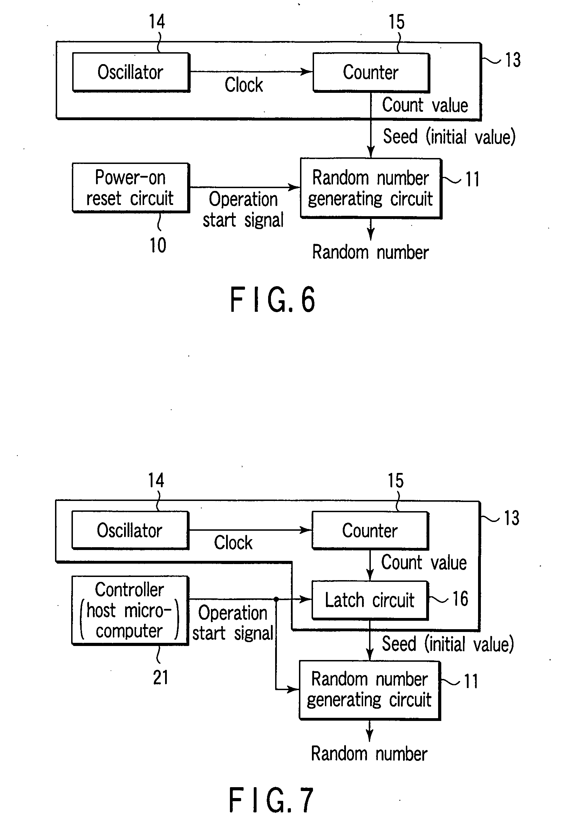

FIG. 6 shows the random number's seed generating circuit according to the second embodiment of the present invention.

A random number generating circuit 11 generates a random number on the basis of a random number's seed (initial value) output from a random number's seed generating circuit 13. The random number's seed generating circuit 13 is constituted by an oscillator 14 which starts generating a clock immediately after power-on and a counter 15 which sequentially increases (or decreases) the count value on the basis of the clock output from the oscillator 14.

Immediately after power-on, the oscillator 14 must self-oscillate and supply the oscillation output to the respective functional blocks and circuits. This operation is done to set the respective functional blocks and circuits in an operable state. In other words, when the power supply is turned on, the oscillator 14 must operate at the very beginning. The oscillator 14 also generates a high-speed clock at a period of several ns (e.g., about 5 ns).

As in the above-described first embodiment, the clock to be supplied to the counter 15 may be generated using another oscillator (e.g., a ring oscillator) provided in the LSI.

Since the counter 15 operates on the basis of the high-speed clock, the count value output from the counter 15 also changes at a high speed.

The operation start signal is asynchronous with the high-speed clock generated by the oscillator 14. In addition, the time after the power supply is turned on until the power supply used in the LSI is stabilized and, more specifically, the time after the power supply is turned on until the operation start signal is output from a power-on reset circuit 10 changes within a predetermined range (e.g., several µs to several hundred ms). This range is sufficiently wide with respect to the period (several ns) of the clock generated by the oscillator 14.

That is, the time after the power supply is turned on until the operation start signal is input to the random number generating circuit 11 changes within the range of several µs to several hundred ms at random. On the other hand, the count value changes fast within this range at several ns. For this reason, the random number's seed (count value) when the random number generating circuit 11 starts operating changes at random every time the power supply is turned on.

As described above, in this embodiment, the time range after the power supply is turned on until the operation start signal is input to the random number generating circuit 11 is sufficiently widened as compared to the time (clock period) in which the count value changes. Hence, the time after the power supply is turned on until the operation start signal is input to the random number generating circuit 11 changes within this range at random whereby the random number's seed can be changed at random every time the power supply is turned on.

In this embodiment, the count value of the counter 15 is directly input to the random number generating circuit 11. When the operation start signal is input to the random number generating circuit, the random number's seed is determined. Simultaneously, the operation of generating a random number starts in the random number generating circuit. For this reason, unique effects such as reduction of the area of the random number's seed generating circuit, facilitation of design, and reduction of manufacturing cost can be obtained.

### [Third Embodiment]

FIG. 7 shows a random number's seed generating circuit according to the third embodiment of the present invention.

A random number generating circuit 11 generates a random number on the basis of a random number's seed (initial value) output from a random number's seed generating circuit 13.

The random number's seed generating circuit 13 is constituted by an oscillator 14 which starts generating a clock immediately after power-on, a counter 15 which sequentially increases (or decreases) the count value on the basis of the clock output from the oscillator 14, and a latch circuit 16 which receives the count value of the counter 15 on the basis of an operation start signal (reception signal) from a controller 21.

Immediately after power-on, the oscillator 14 must self-oscillate and supply the oscillation output to the respective functional blocks and circuits. This operation is done to set the respective functional blocks and circuits in an operable state. In other words, when the power supply is turned on, the oscillator 14 must operate at the very beginning. The oscillator 14 also generates a high-speed clock at a period of several ns (e.g., about 5 ns).

As in the above-described first embodiment, the clock to be supplied to the counter 15 may be generated using another oscillator (e.g., a ring oscillator) provided in the LSI.

Since the counter 15 operates on the basis of the high-speed clock, the count value output from the counter 15 also changes at a high speed.

The timing at which the count value of the counter 15 is received in the latch circuit 16 is determined by the operation start signal from the controller (host microcomputer) 21.

The operation start signal from the controller 21 means a signal which is output from the controller 21 to operate the random number generating circuit 11 when a random number is required for certain processing. The operation start signal is asynchronous with the clock generated by the oscillator 14.

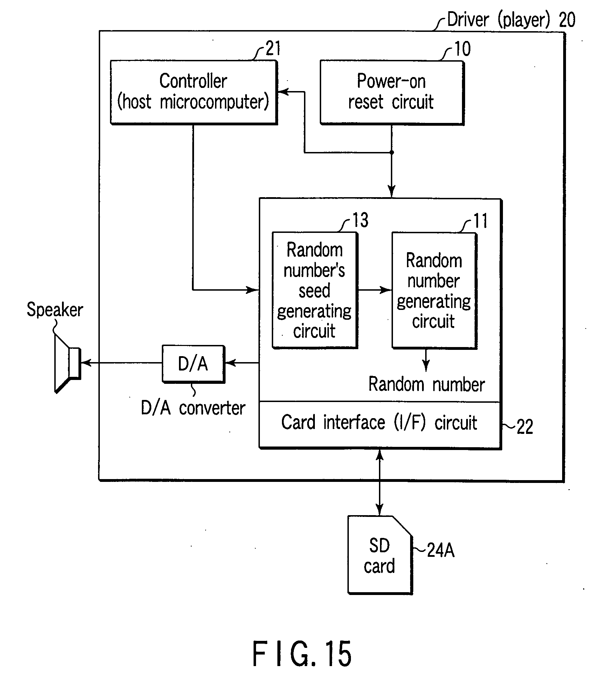

For example, in a system (FIG. 15) using an SD card, data is written in or read out from an SD card 24A using the system control CPU (controller) 21, an SD card interface circuit 22, and a digital signal processing circuit (DSP) 23.

To write data in or read out data from the SD card 24A, the system control CPU 21 outputs a signal that instructs access to the SD card 24A.

The signal that instructs access to the SD card 24A is supplied to the latch circuit 16 as the operation start signal and used to receive a random number's seed.

Generally, the operation clock of the System control CPU 21 is asynchronous with the clock which controls the operation of the SD card interface circuit 22. In addition, the period of the operation start signal output from the System control CPU 21 is about several µs. That is, the operation speed of the counter 15 (the speed at which the count value changes) is sufficiently higher than the operation speed (frequency) of the operation start signal. For this reason, the count value latched by the latch circuit 16 changes at random every time the operation start signal is output.

The count value latched by the latch circuit 16 is used as the random number's seed (initial value). As a result, the random number's seed can be changed at random every time the operation start signal is output.

As described above, in this embodiment, the timing at which the count value is received, i.e., the random number's seed, is determined on the basis of the operation start signal from the system controller 21. Hence, the random number's seed can be changed at random every time the operation start signal is output.

In this embodiment, the operation start signal from the system controller 21 can be output at a timing operated by the device user (or system user). For example, in an audio player using an SD card, the operation start signal may be output at a timing when the device user has pressed the play button or at a timing when an SD card is inserted into the player.

### [Fourth Embodiment]

A random number's seed generating circuit according to this embodiment is a modification to the random number's seed generating circuit according to the above-described third embodiment.

As characteristic features of the random number's seed generating circuit according to the fourth embodiment, ① a latch circuit which latches a count value is omitted, and ② the operation start signal from a controller 21 is directly input to the random number generating circuit, unlike the random number's seed generating circuit according to the above-described third embodiment.

In this case, when the operation start signal from the controller 21 is input to the random number generating circuit, a random number's seed is determined on the basis of the count value of the counter in the random number's seed generating circuit, and the operation of generating a random number starts in the random number generating circuit.

The random number's seed generating circuit according to this embodiment will be described below in detail.

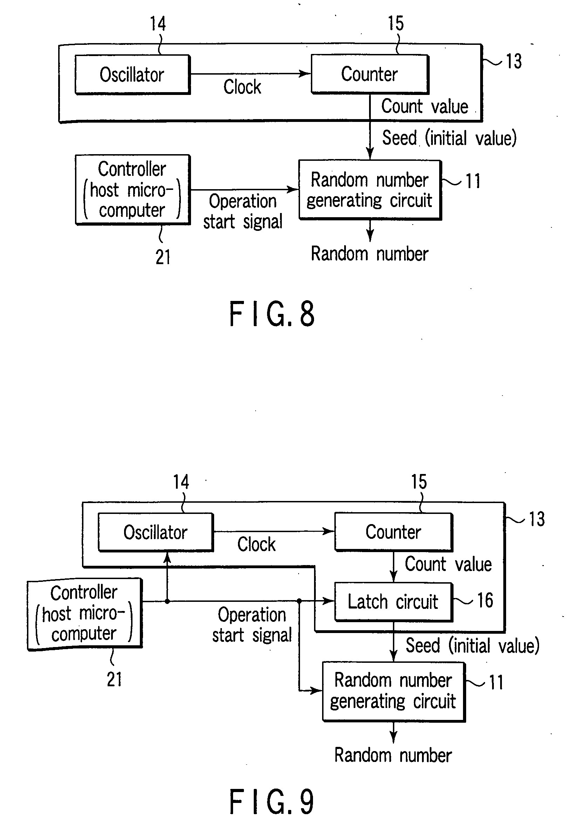

FIG. 8 shows the random number's seed generating circuit according to the fourth embodiment of the present invention.

A random number generating circuit 11 generates a random number on the basis of a random number's seed (initial value) output from a random number's seed generating circuit 13. The random number's seed generating circuit 13 is constituted by an oscillator 14 which starts generating a clock immediately after power-on and a counter 15 which sequentially increases (or decreases) the count value on the basis of the clock output from the oscillator 14.

Immediately after power-on, the oscillator 14 must self-oscillate and supply the oscillation output to the respective functional blocks and circuits. This operation is done to set the respective functional blocks and circuits in an operable state. In other words, when the power supply is turned on, the oscillator 14 must operate at the very beginning. The oscillator 14 also generates a high-speed clock at a period of several ns (e.g., about 5 ns).

As in the above-described first embodiment, the clock to be supplied to the counter 15 may be generated using another oscillator (e.g., a ring oscillator) provided in the LSI.

Since the counter 15 operates on the basis of the high-speed clock, the count value output from the counter 15 also changes at a high speed.

The timing at which the count value of the counter 15 is input to the random number generating circuit 11 as a random number's seed is determined by the operation start signal from the controller (host microcomputer) 21.

The operation start signal from the controller 21 means a signal which is output from the controller 21 to operate the random number generating circuit 11 when a random number is required for certain processing. The operation start signal is asynchronous with the clock generated by the oscillator 14.

As the timing at which the operation start signal is output from the controller 21, a timing operated by the device user (or system user) can be used. For example, in an audio player using an SD card, the operation start signal may be output at a timing when the system user has pressed the play button or at a timing when an SD card is inserted into the player.

As described above, in this embodiment, the timing at which the count value is received, i.e., the random number's seed, is determined on the basis of the operation start signal from the controller 21. Hence, the random number's seed can be changed at random every time the operation start signal is output.

In this embodiment, the count value of the counter 15 is directly input to the random number generating circuit 11. The random number's seed is determined on the basis of the operation start signal. For these reasons, unique effects such as reduction of the area of the random number's seed generating circuit, facilitation of design, and reduction of manufacturing cost can be obtained.

### [Fifth Embodiment]

A random number's seed generating circuit according to this embodiment is a modification to the random number's seed generating circuit according to the above-described third embodiment.

FIG. 9 shows the random number's seed generating circuit according to the fifth embodiment of the present invention.

As a characteristic feature of a random number's seed generating circuit 13 of this embodiment, the operation start signal from a controller 21 is also input to an oscillator 14 as an oscillation stop signal to stop the operation of the oscillator 14, unlike the random number's seed generating circuit of the above-described third embodiment. The arrangement of the remaining parts is the same as that of the random number's seed generating circuit according to the above-described third embodiment.

In the random number's seed generating circuit 13 of the present invention, after a random number's seed (initial value) is determined, the random number's seed generating circuit 13 need not be kept operated.

Hence, in this embodiment, in accordance with the operation start signal from the controller 21, the random number's seed is latched by a latch circuit 16, and simultaneously, the operation of the oscillator 14 is stopped, thereby reducing power consumption.

In this embodiment, the oscillator 14 is set in an inoperative state after a random number's seed is determined. Instead, power consumption can also be reduced even by sufficiently lowering the frequency of the clock generated by the oscillator 14.

### [Sixth Embodiment]

A random number's seed generating circuit according to this embodiment is a modification to the random number's seed generating circuit according to the above-described fourth embodiment.

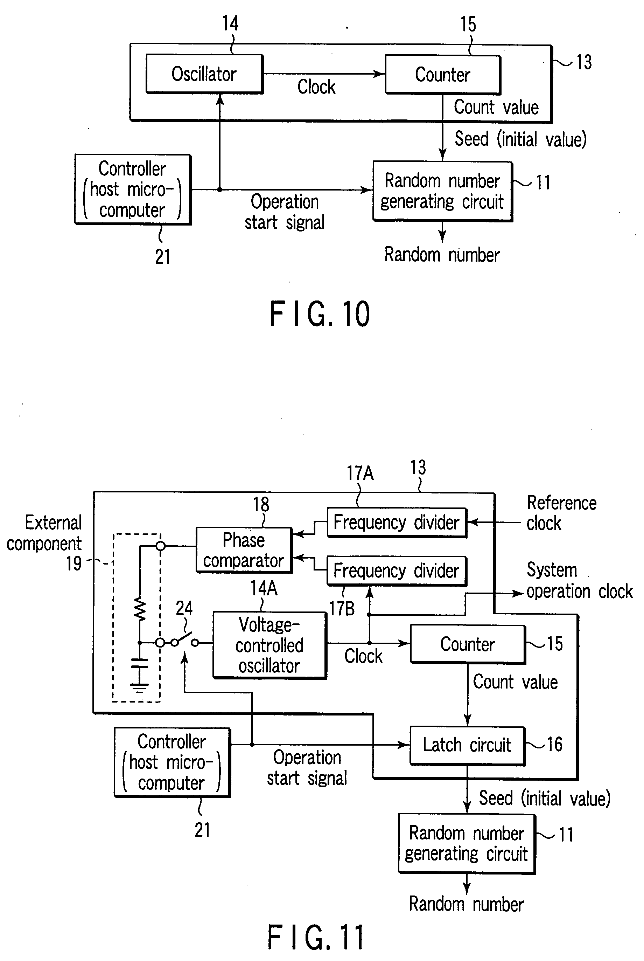

FIG. 10 shows the random number's seed generating circuit according to the sixth embodiment of the present invention.

As a characteristic feature of a random number's seed generating circuit 13 of this embodiment, the operation start signal from a controller 21 is also input to an oscillator 14 as an oscillation stop signal to stop the operation of the oscillator 14, unlike the random number's seed generating circuit of the above-described fourth embodiment. The arrangement of the remaining parts is the same as that of the random number's seed generating circuit according to the above-described fourth embodiment.

As described in the above fifth embodiment, in the random number's seed generating circuit of the present invention, after a random number's seed (initial value) is determined by the operation start signal from the controller 21, the random number's seed generating circuit 13 need not be kept operated.

Hence, in this embodiment, in accordance with the operation start signal from the controller 21, when the random number generating circuit 11 operates to determine the random number's seed, the operation of the oscillator 14 is simultaneously stopped, thereby reducing power consumption.

Even in this embodiment, after the random number generating circuit 11 is set in the operative state, the oscillation frequency of the oscillator 14 may be sufficiently lowered to reduce power consumption.

### [Seventh Embodiment]

As the characteristic features of a random number's seed generating circuit according to this embodiment, after the power supply is turned on until reception of a random number's seed is complete, control of the oscillator in the random number's seed generating circuit from the outside of the LSI is inhibited to prevent any malicious analysis of the integrated circuit of the present invention, and the clock output from the oscillator in the random number's seed generating circuit is used as the operation clock of the system that operates using a random number.

FIG. 11 shows a random number's seed generating circuit according to the seventh embodiment of the present invention.

A random number generating circuit 11 generates a random number on the basis of a random number's seed (initial value) output from a random number's seed generating circuit 13.

The random number's seed generating circuit 13 has a VCO (Voltage Controlled Oscillator) 14A which starts generating a clock immediately after power-on, a counter 15 which sequentially increases (or decreases) the count value on the basis of the clock output from the oscillator 14A, and a latch circuit 16 which receives the count value of the counter 15 on the basis of an operation start signal (reception signal) from a controller 21.

In this embodiment, the clock output from the oscillator 14A is also used as a system operation clock. For this purpose, the random number's seed generating circuit 13 also has a PLL (Phase Locked Loop) circuit which stabilizes the frequency of the clock output from the oscillator 14A to a predetermined value.

The PLL circuit is constructed by a frequency divider 17A which divides the frequency of a reference clock, a frequency divider 17B which divides the frequency of the clock output from the oscillator 14A, a phase comparator 18 which compares the phase of the clock output from the frequency divider 17A with that of the clock output from the frequency divider 17B, an LPF (Low-Pass Filter) 19 formed from a resistor and capacitor, and a switch circuit 24 controlled by the operation start signal from the controller 21.

Immediately after power-on, the oscillator 14A must self-oscillate and supply the oscillation output to the respective functional blocks and circuits. This operation is done to set the respective functional blocks and circuits in an operable state. In other words, when the power supply is turned on, the oscillator 14A must operate at the very beginning.

The oscillator 14A generates a high-speed clock at a period of several ns (e.g., about 5 ns). At this time, the switch circuit 24 is in an OFF state, and the PLL circuit does not function to inhibit control of the frequency of the oscillator 14A from the outside of the LSI.

Since the counter 15 operates on the basis of the high-speed clock, the count value output from the counter 15 also changes at a high speed.

When a time of several µs to several hundred ms has elapsed after power-on, the operation start signal from the controller 21 is input to the latch circuit 16 and switch circuit 24. This range is sufficiently wider than the period (several ns) of the clock generated by the oscillator 14A. The operation start signal is asynchronous with the clock generated by the oscillator 14A.

That is, the time after the power supply is turned on until the operation start signal is input from the controller 21 to the latch circuit 16 changes within the range of several µs to several hundred ms at random. On the other hand, the count value changes fast within this range at several ns. For this reason, the count value latched by the latch circuit 16 changes at random every time the power supply is turned on.

Additionally, since the count value latched by the latch circuit 16 is used as a random number's seed (initial value), the random number's seed can consequently be changed at random every time the power supply is turned on.

In this embodiment, when the operation start signal from the controller 21 is input to the latch circuit 16, and the random number's seed is determined, the switch circuit 24 is simultaneously turned on to make the PLL circuit function. The clock output from the oscillator 14A in the random number's seed generating circuit 13 is also used as the operation clock of a system which operates using a random number.

For example, in a system as shown in FIG. 15, to operate an interface circuit 22, an operation clock at about 20 MHz is necessary. As the operation clock, the clock output from the oscillator 14A in the random number's seed generating circuit 13 shown in FIG. 11 is used.

For a normal LSI, control by a PLL circuit is required to stabilize the frequency of the clock output from an oscillator (VCO) in many cases. The PLL circuit has the LPF (low-pass filter) 19. This LPF 19 is connected to the outside of the LSI as a so-called external component.

However, this means that the frequency (oscillation frequency) of the clock output from the oscillator (VCO) can be controlled outside the LSI. Hence, the random number's seed is freely controlled, and data cannot be protected from a malicious analyzer.

That is, when the external component is removed, and the voltage for controlling the oscillator (VCO) 14A can be freely controlled, the random number's seed can be set at the same value or almost the same value every time the power supply is turned on by sufficiently lowering the oscillation frequency of the oscillator 14A (by setting almost the same count value to the counter 15).

In this embodiment, after the power supply is turned on until the random number's seed is determined, the switch circuit 24 is kept OFF to prevent the oscillator (VCO) 14A from being controlled by the PLL circuit (or a malicious analyzer outside the LSI).

After the counter value is received by the latch circuit 16 and the random number's seed is determined in accordance with the operation start signal from the controller 21, the switch circuit 24 is turned on to start controlling the oscillator (VCO) 14A by the PLL circuit.

When the switch circuit 24 is turned on, the oscillation frequency of the oscillator 14A can be made extremely low or stopped by control outside the LSI. In this embodiment, since the clock output from the oscillator 14A is also used as the operation clock of the system, the operation of the LSI is not analyzed.

That is, when the oscillation frequency of the oscillator 14A is made extremely low or stopped, the system itself stops its operation.

As described above, in this embodiment, first, the time range after the power supply is turned on until the operation start signal (reception signal) from the controller 21 is input to the latch circuit 16 is sufficiently widened as compared to the time (clock period) in which the count value changes. In addition, the time after the power supply is turned on until the operation start signal is input to the latch circuit 16 changes within this range at random. For this reason, the random number's seed can be changed at random every time the power supply is turned on.

Second, when the clock output from the oscillator in the random number's seed generating circuit is used as the operation clock of a system that operates using a random number and the frequency of the operation clock is stabilized by the PLL circuit, the oscillator in the random number's seed generating circuit is prevented from being controlled from the outside of the LSI after the power supply is turned on until reception of the random number's seed is complete. Hence, data can be protected from a malicious analyzer.

### [Eighth Embodiment]

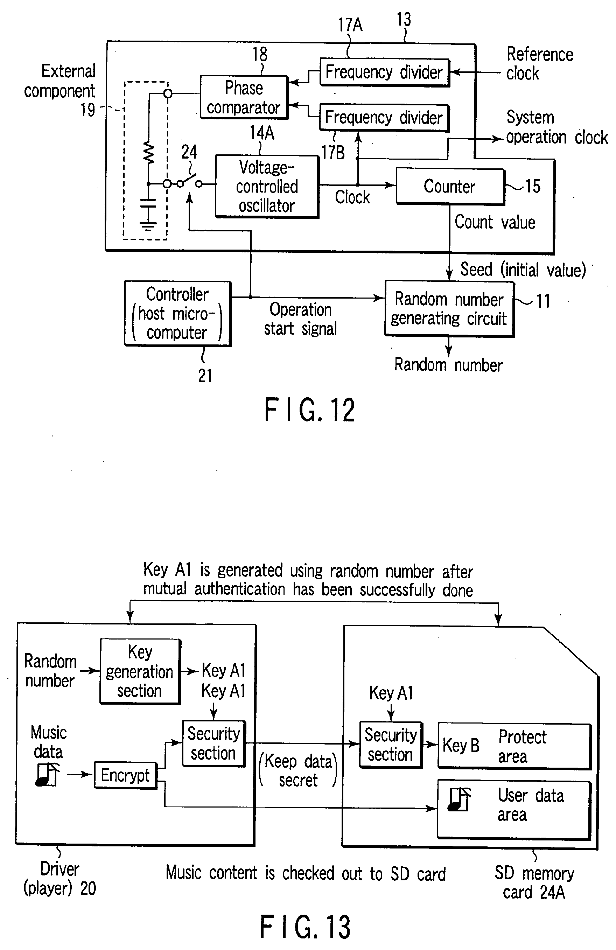

FIG. 12 shows a random number's seed generating circuit according to the eighth embodiment of the present invention.

A random number's seed generating circuit according to this embodiment is a modification to the random number's seed generating circuit according to the above-described seventh embodiment.

As characteristic features of the random number's seed generating circuit according to the eighth embodiment, ① a latch circuit which latches a count value is omitted, and ② the operation start signal from a controller 21 is directly input to a random number generating circuit 11 as its operation start signal, unlike the random number's seed generating circuit according to the above-described seventh embodiment.

In this case, when the operation start signal from the controller 21 is input to the random number generating circuit 11, a random number's seed is determined on the basis of the count value of a counter 15 in a random number's seed generating circuit 13, and the operation of generating a random number starts in the random number generating circuit 11.

As described above, in this embodiment, the timing at which the count value is received, i.e., the random number's seed is determined on the basis of the operation start signal from the controller 21. Hence, the random number's seed can be changed at random every time the operation start signal is output.

Additionally, the clock output from the oscillator in the random number's seed generating circuit is used as the operation clock of a system that operates using a random number. The oscillator in the random number's seed generating circuit is prevented from being controlled from the outside of the LSI after the power supply is turned on until reception of the random number's seed is complete. For this reason, data can be protected from a malicious analyzer.

In this embodiment, the count value of the counter 15 is directly input to the random number generating circuit 11, and the random number's seed is determined on the basis of the operation start signal. For this reason, unique effects such as reduction of the area of the random number's seed generating circuit, facilitation of design, and reduction of manufacturing cost can be obtained.

### [Application Example]

An application example in which the random number's seed generating circuit according to any one of the above-described first to eighth embodiments is applied to a system using an SD memory card (Secure Digital memory card) will be described below.

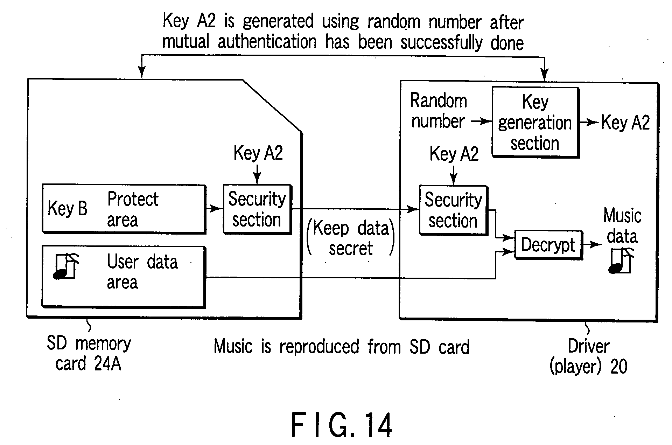

FIGS. 13 and 14 show the schematic arrangement of an SD memory card system.

An SD memory card means a memory card having a strong copyright protecting function as one of its characteristic features.

The memory area in an SD memory card 24A is formed from a user data area that can be normally accessed and a protect area that can be accessed only when mutual authentication between a driver (player) 20 and the card 24A is done.

For example, to write music data in the SD memory card, mutual authentication is done first, as shown in FIG. 13. If the mutual authentication has been successfully done, an operation start signal is output from, e.g., the controller, and a random number's seed is generated by the random number's seed generating circuit according to the present invention. A random number is generated using this random number's seed, and a temporary key (session key) A1 for access to the protect area is generated.

The music data is encrypted in the driver (player) 20 using a key B. The encrypted music data is stored in the user data area in the SD memory card 24A. The key B is stored in the protect area in the SD memory card 24A. Since the key B has been used to encrypt the music data, leakage of the key B may lead to illicit copy of the music data.

To prevent this, on the driver 20 side, the key B is encrypted by the security section using the key A1 generated using a random number, and transferred to the SD memory card 24A. With this processing, analysis of bus information between the host microcomputer and the SD memory card is prevented.

The key A1 is a temporary key. It is generated using a random number according to the present invention every time the protect area is accessed (or every time the power supply is turned on). The key A1 changes every time the protect area is accessed (or every time the power supply is turned on).

To read out the music data from the SD memory card, mutual authentication is done first, as shown in FIG. 14. If the mutual authentication has been successfully done, an operation start signal is output from, e.g., the controller, and a random number's seed is generated by the random number's seed generating circuit according to the present invention. A random number is generated using this random number's seed, and a temporary key (session key) A2 for access to the protect area is generated.

The encrypted music data is read out from the user data area of the SD memory card 24A. The key B is read out from the protect area of the SD memory card 24A. On the SD memory card 24A side, in reading the key B, the key B is encrypted by the security section using the key A2 generated using a random number, and transferred to the host microcomputer. With this processing, analysis of bus information between the host microcomputer and the SD memory card is prevented.

The key B is decrypted on the SD memory card 24A using the key A2. The encrypted music data is decrypted using the key B. As a result, the music data is reproduced.

The key A2 is a temporary key. It is generated using a random number according to the present invention every time the protect area is accessed (or every time the power supply is turned on). The key A2 changes every time the protect area is accessed (or every time the power supply is turned on).

In reading the music data from the SD memory card 24A, if the mutual authentication has failed, no operation start signal is output from, e.g., the controller (host microcomputer). Hence, no random number according to the present invention is generated. Consequently, no temporary key (session key) A2 is generated.

In this case, although the encrypted music data can be read out, the key B cannot be read out. Since the music data cannot be reproduced, any illicit read or illicit copy of the music data can be prevented.

FIG. 15 shows a detailed example of a system formed from a driver having the random number's seed generating circuit of the present invention and an SD memory card.

A digital signal processing circuit (DSP) 23 has a random number generating circuit 11 and a random number's seed generating circuit 13 according to the present invention. The random number's seed generating circuit 13 corresponds to any one of the random number's seed generating circuits according to the above-described first to eighth embodiments.

An interface circuit 22 exchanges data with the SD memory card 24A. The interface circuit 22 is controlled by an operation clock at, e.g., about 20 MHz. When the random number's seed generating circuit according to the above-described seventh or eighth embodiment is employed, the operation clock is generated by the oscillator in the random number's seed generating circuit.

After the power supply potential used by the LSI is stabilized, a power-on reset circuit 10 outputs a reset signal. This reset signal is supplied to a controller (host microcomputer) 21. In the random number's seed generating circuit according to the above-described first or second embodiment, the reset signal is also supplied to the digital signal processing circuit 23.

In the random number's seed generating circuit according to one of the above-described third to sixth embodiments, upon receiving the reset signal from the power-on reset circuit 10, the controller 21 outputs an operation start signal to the random number's seed generating circuit 13. The controller 21 may output the operation start signal at an operation timing of the device user (e.g., at a timing when the device user has pressed the play button or at a timing when the SD memory card is inserted into the driver).

In this system, e.g., the interface circuit 22 and digital signal processing circuit 23 are formed in one chip. The controller (CPU) 21, interface circuit 22, and digital signal processing circuit 23 may be formed in one chip.

As has been described above, according to the random number's seed generating circuit according to any one of the embodiments of the present invention, the following effects can be obtained.
① By using an oscillator which generates a high-speed clock and a reception signal (operation start signal) slower than the clock, the random number's seed can be changed at random without using any nonvolatile memory every time the power supply is turned on.
② As the reception signal, the output signal from the power-on reset circuit or the operation start signal from the controller can be used. With the simple arrangement, the random number's seed can be changed at random.
③ When the random number's seed generating circuit is operated using an operation timing of the device user, the random number's seed can reliably be changed every time the power supply is turned on.
④ After the random number's seed is determined by the random number's seed generating circuit, the oscillator is stopped to reduce power consumption of the LSI.
⑤ When a VCO is used as the oscillator in the random number's seed generating circuit, and the output clock from the VCO is used as the system operation clock, control of the oscillator from the outside of the LSI is inhibited after the power supply is turned on until the random number's seed is determined. With this arrangement, any malicious analysis of the LSI operation can be prevented.

## Claims

1. A random number's seed generating circuit comprising:
an oscillator (14) which generates a clock; and
a counter (15) which operates in synchronism with the clock,
**characterized in that** a count value of said counter is output in response to a signal asynchronous with the clock, and the output count value is used as an initial value to generate a random number.

2. A circuit according to claim 1, **characterized in that** a timing at which the count value of said counter is output changes at random within a predetermined range in response to the signal, and the output count value is used as the initial value to generate the random number.

3. A circuit according to claim 1, **characterized in that** the signal is a signal output from a power-on reset circuit (10) upon detecting that a power supply is turned on, and a power supply potential is stabilized.

4. A circuit according to claim 1, **characterized in that** the signal is an operation start signal output from a controller (21).

5. A circuit according to claim 4, **characterized in that** the operation start signal is output when the controller (21) recognizes that a power supply is turned on.

6. A circuit according to claim 4, **characterized in that** the operation start signal is output when the controller (21) recognizes that a predetermined operation is performed by a user.

7. A circuit according to claim 1, **characterized in that** said oscillator (14) is set in an inoperative state or lowers a frequency of the clock after the count value is output in response to the signal.

8. A circuit according to claim 1, **characterized in that** said oscillator (14) is a voltage-controlled oscillator (14A) having an external terminal, said oscillator and external terminal are electrically disconnected before the count value is output, and said oscillator and external terminal are electrically connected after the count value is output.

9. A circuit according to claim 8, **characterized in that** a switch circuit (24) controlled by the signal is connected between said oscillator and the external terminal.

10. A circuit according to claim 8, **characterized in that** after the count value is output, the clock is used as a system clock.

11. A circuit according to claim 1, **characterized in that** a timing at which the count value is output changes within a range of time longer than a period of the clock every time the count value is output.

12. A circuit according to claim 1, **characterized by** further comprising a latch circuit (16) which latches the count value on the basis of the signal,
wherein the count value latched by said latch circuit is used as the initial value.

13. A circuit according to claim 1, **characterized in that** when a random number generating circuit (11) to which the signal is input is set in an operative state, the count value is simultaneously received by the random number generating circuit as the initial value.

14. A driver comprising:
a random number's seed generating circuit (13) having an oscillator (14) which generates a clock and a counter (15) which operates in synchronism with the clock; and
a random number generating circuit (11) which generates a random number using an initial value generated by said random number's seed generating circuit,
**characterized in that** a count value of said counter is output in response to a signal asynchronous with the clock, the output count value is used as the initial value, and transfer data is kept secret using the random number.

15. A driver according to claim 14, **characterized in that** a timing at which the count value of said counter is output changes at random within a predetermined range in response to the signal, the output count value is used as the initial value, and the transfer data is kept secret using the random number.

16. A driver according to claim 14, **characterized in that** the random number is generated every time a power supply is turned on, every time the data is written or read, or every time a predetermined operation is performed by a user.

17. A driver according to claim 14, **characterized in that** the signal is a signal output from a power-on reset circuit (10) upon detecting that a power supply is turned on, and a power supply potential is stabilized.

18. A driver according to claim 14, **characterized in that** the signal is an operation start signal output from a controller (21).

19. A driver according to claim 18, **characterized in that** the operation start signal is output when the controller (21) recognizes that a power supply is turned on.

20. A driver according to claim 18, **characterized in that** the operation start signal is output when the controller (21) recognizes that a predetermined operation is performed by a user.

21. A driver according to claim 14, **characterized in that** said oscillator (14) is set in an inoperative state or lowers a frequency of the clock after the count value is output in response to the signal.

22. A driver according to claim 14, **characterized in that** said oscillator (14) is a voltage-controlled oscillator (14A) having an external terminal, said oscillator and external terminal are electrically disconnected before the count value is output, and said oscillator and external terminal are electrically connected after the count value is output.

23. A driver according to claim 22, **characterized in that** a switch circuit (24) controlled by the signal is connected between said oscillator and the external terminal.

24. A driver according to claim 22, **characterized in that** after the count value is output, the clock is used as a system clock.

25. A driver according to claim 14, **characterized in that** a timing at which the count value is output changes within a range of time longer than a period of the clock every time the count value is output.

26. A driver according to claim 14, **characterized by** further comprising a latch circuit (16) which latches the count value on the basis of the signal,
wherein the count value latched by said latch circuit is used as the initial value.

27. A driver according to claim 14, **characterized in that** when said random number generating circuit (11) to which the signal is input is set in an operative state, the count value is simultaneously received by said random number generating circuit as the initial value.

28. An SD memory card system comprising:
a driver (20) comprising a random number's seed generating circuit (13) having an oscillator (14) which generates a clock and a counter (15) which operates in synchronism with the clock, and a random number generating circuit (11) which generates a random number using an initial value generated by said random number's seed generating circuit; and
an SD memory card (24A) driven by said driver and having a data protecting function,
**characterized in that** a count value of said counter is output in response to a signal asynchronous with the clock, the output count value is used as the initial value, and transfer data is kept secret using the random number.

29. A system according to claim 28, **characterized in that** a timing at which the count value of said counter is output changes at random within a predetermined range in response to the signal, the output count value is used as the initial value, and the transfer data is kept secret using the random number.

30. A system according to claim 28, **characterized in that** the random number is generated every time a power supply is turned on, every time the data is written or read, or every time a predetermined operation is performed by a user.

31. A system according to claim 28, **characterized in that** the signal is a signal output from a power-on reset circuit (10) upon detecting that a power supply is turned on, and a power supply potential is stabilized.

32. A system according to claim 28, **characterized in that** the signal is an operation start signal output from a controller (21).

33. A system according to claim 32, **characterized in that** the operation start signal is output when the controller (21) recognizes that a power supply is turned on.

34. A system according to claim 32, **characterized in that** the operation start signal is output when the controller (21) recognizes that a predetermined operation is performed by a user.

35. A system according to claim 28, **characterized in that** said oscillator (14) is set in an inoperative state or lowers a frequency of the clock after the count value is output in response to the signal.

36. A system according to claim 28, **characterized in that** said oscillator (14) is a voltage-controlled oscillator (14A) having an external terminal, said oscillator and external terminal are electrically disconnected before the count value is output, and said oscillator and external terminal are electrically connected after the count value is output.

37. A system according to claim 36, **characterized in that** a switch circuit (24) controlled by the signal is connected between said oscillator and the external terminal.

38. A system according to claim 36, **characterized in that** after the count value is output, the clock is used as a system clock.

39. A system according to claim 28, **characterized in that** a timing at which the count value is output changes within a range of time longer than a period of the clock every time the count value is output.

40. A system according to claim 28, **characterized by** further comprising a latch circuit (16) which latches the count value on the basis of the signal,
wherein the count value latched by said latch circuit is used as the initial value.

41. A system according to claim 28, **characterized in that** when said random number generating circuit (11) to which the signal is input is set in an operative state, the count value is simultaneously received by said random number generating circuit as the initial value.
